# EUROPÄISCHE PATENTANMELDUNG

(11) **EP 2 145 548 A1**
(43) Veröffentlichungstag der Anmeldung: **20.01.2010**
(21) Anmeldenummer: 08012839.0
(22) Anmeldetag: 16.07.2008
(51) Int. Cl.: A23L 1/317, A23L 1/01

(54) **Verfahren zur Aufnahme und Behandlung eines Bräts in einem Behälter**

(71) Anmelder: ARTA PLAST AB, 135 48 Tyresö (SE)
(72) Erfinder: Steg, Helge, 113 50 Stockholm (SE)
(74) Vertreter: Niedmers, Ole

(57) **Zusammenfassung**

Es wird ein Verfahren zur Aufnahme und Behandlung eines Bräts (13) in einem Behälter (10) vorgeschlagen, im wesentlichen bestehend aus einem Behälterunterteil (11) und einem Behälteroberteil (12), insbesondere eines Bräts (13), das Grundlage für eine Leberpastete ist, wobei das Brät (13) nach Abschluß der Behandlung im Behälter (10) dargebotenen und/oder dargereicht wird. Das Verfahren umfaßt folgende Schritte:
a. Herstellung des Behälters (10) und Herstellung des Bräts (13) sowie
b. Einfüllen des Bräts (13) in das Behälterunterteil (11).
Es wird folgender weiterer Verfahrensschritt vorgeschlagen, nämlich daß
c. die später sichtbare Darbietungs- und/oder Darreichungsoberfläche (14) des Bräts (13) mit einer Kruste (15) versehen wird.

## Beschreibung

Die Erfindung betrifft ein Verfahren zur Aufnahme und Behandlung eines Bräts in einem Behälter, im wesentlichen bestehend aus Behälterunterteil und Behälteroberteil, insbesondere eines Bräts, das Grundlage für eine Leberpastete ist, wobei das Brät (13) nach Abschluß der Behandlung im Behälter dargebotenen und/oder dargereicht wird, umfassend folgende Schritte:
a. Herstellung des Behälters und Herstellung des Bräts sowie
b. Einfüllen des Bräts in das Behälterunterteil.

Viele Lebensmittel werden heutzutage in schon abgepackter Form in Lebensmittelgeschäften und Supermärkten in Behältern aus den unterschiedlichsten Materialien, überwiegend Kunststoffmaterialien, verpackt aufgenommen und den Konsumenten präsentiert und dargereicht. Diese Lebensmittel sind bspw. Wurstwaren, Käsewaren aber auch Salate in den unterschiedlichsten Ausführungen, wobei regelmäßig aber aufgrund der verwendeten Kunststoffmateralien für den Behälter weder vom Deckel des Behälters (Behälteroberteil) noch vom eigentlichen Behälterunterteil, in dem das Lebensmittels eingefüllt und dargereicht wird, das Lebensmittel direkt sichtbar ist. Das hat viele Gründe, die auch zu einem wesentlichen Teil verkaufspsychologisch begründbar sind, denn das in dem Behälter aufgenommene und regelmäßig mit einem Behälterdeckel verschlossene Lebensmittel hat regelmäßig, wenn es zudem auch noch lichtempflindlich ist, ein äußeres optisches Erscheinungsbild, das die potentiellen Käuferkreise nicht zum Kauf animiert, es sei denn, es ist "taufrisch" eingefüllt. Aus diesem Grunde sind derartige mit Lebensmittel gefüllte Behälter mit aufwendig gestalteten Etiketten oder auch mittels der sogenannten In-Mold-Technik mit auf dem Behälterunterteil und/oder auf dem Behälteroberteil aufgebrachten Etiketten versehen oder aufgebrachten Abbildungen versehen, die das im Behälter aufgenommene Lebensmittel in "verschönter" Form zeigen, wobei diese Darstellungen auch keinem Alterungsprozeß durch Lichteinwirkung oder Temperatureinwirkung unterworfen sind.

Diese Verpackungsmethode eines Lebensmittels in einem bedrucktem bzw. mit einem Etikett versehenen Behälterteil, sei es das Behälteroberteil und/oder das Behälterunterteil, hat den sehr großen Nachteil, daß der potentielle Konsument bez.. Käufer keinen Blick auf das im Behälter aufgenommene Lebensmittel werfen kann, wenn der Behälter bestimmungsgemäß mit einem Deckelteil und/oder einer Folie verschlossen ist. Der potentielle Konsument bzw. Käufer kann sich somit kein Bild vom Frischegrad bzw. dem Aussehen des im Behälter aufgenommen Lebensmittels machen, d.h. eine kaufentscheidende, positive Anmutung an den potentiellen Konsumenten, erfolgt nicht. Aus hygienischen Gründen, nicht nur bei extrem leicht verderblichen Lebensmitteln, müssen die Behälterunterteile mit einem das Behälterunterteil verschließenden Behälteroberteil (Behälterdeckel) versehen sein.

Das hält sehr viele potentielle Konsumenten davon ab, derartig dargereichte Lebensmittel zu kaufen, obwohl gewährleistet ist, daß die Lebensmittel an sich unter strenger Beachtung der landesüblichen Verfallsrichtlinien hergestellt worden sind und von einwandfreier Qualität sind, denn was man selbst beim Kauf von Lebensmitteln nicht sehen kann, wird nur mit erheblichen Bedenken seitens des Konsumenten erworben bzw. gar nicht gekauft.

Insbesondere im skandinavischen Raum ist die sogenannte "Leberpastete" ein von allen Bevölkerungsschichten gern und in großen Mengen konsumierter Brotaufstrich, der bisweilen auch als Vorspeise vor Hauptmahlzeiten mit Salaten und dergleichen konsumiert wird. In den unterschiedlichen skandinavischen Ländern weicht "die" Leberpastete, die in den vorbeschriebenen Behälterunterteilen aber auch in Behältern dargeboten wird, die aus Behälterunterteil und Behälteroberteil bestehen, in bezug auf Geschmack, Konsistenz, Würzung und Aussehen zum Teil erheblich ab, gleichwohl besteht aber die Leberpastete grundsätzlich doch überall aus einem Brät, das entsprechend der jeweiligen Landestradition im Hinblick auf Aussehen und Bestandteilen unterschiedlich ist. So besteht bspw. die Leberpastete, die in Schweden in derartigem mit Deckelteil verschlossenem Behälterunterteil dargeboten wird, aus einem mehr oder weniger fleischfarbenen Brät, das regelmäßig vorgegart in das Behälterunterteil eingefüllt wird, wobei das Behälterunterteil dann mit einem Behälteroberteil verschlossen wird und dann dargeboten und dargereicht wird.

In Dänemark z.B. ist die Leberpastete quasi eine als Brotaufstrich und als Vorspeise ggf. auch als Dessert verwendete Nationalspeise, die, ggf. vorgegart, in das Behälterunterteil eingefüllt wird und dann bei offener Behältereinfüll- bzw. Entnahmeöffnung so lange gebacken wird, daß diese die für dänische Leberpastete typische dunkelbraune Haut auf der sichtbaren Darreichungsoberfläche bildet, die für den potentiellen Konsumenten einen hohen Kauf- und Verzehranreiz entwickelt, d.h. die Kaufanmutung, die dadurch erzeugt wird, ist sehr groß, da der Backvorgang des Bräts zur Herstellung einer dänischen Leberpastete verhältnismäßig lang dauert, auch bis sich die optisch und geschmacklich sehr anmutende Haut bzw. Oberfläche bildet. Deshalb wird als Behälterunterteil regelmäßig ein gefalteter Aluminiumbehälter als Backform verwendet, der die Backwärme mühelos übersteht.

Die vorbeschriebene dänische Leberpastete ist aufgrund ihrer vorbeschriebenen Herstellungsart auch weder zu einer längeren Lagerung geeignet noch dazu, in bspw. in Kunststoffbehältern aufgenommen zu werden, die preisgünstig durch einen Spritzgießvorgang hergestellt werden können, bspw. wie Joghurtbecher oder dergleichen. Dänische Leberpastete wird in den Supermärkten bzw. Geschäften schlechthin regelmäßig sogar in speziellen Wärmebehältern dargeboten, um bei den Konsumenten auch die Frische dieses Lebensmittels zu vermitteln und letzlich auch durch den angenehmen Geruch nach Gebratenem zum Kauf zu animieren. In gekühlten Regalen wird diese Art hergestellter Leberpastete sinnvollerweise nicht dargereicht.

Die schwedische Leberpastete hingegen weist aufgrund ihrer Herstellungsart und ihrer Darreichungsart keine optisch und geschmacklich ansprechende sichtbare Oberfläche auf, wenn der Behälterdeckel geöffnet worden ist und verhält sich faktisch wie in einem Darm gefüllte Wurstmasse oder wie in einem Behälter aufgenommenem Schmelzkäse oder dergleichen.

Es ist somit Aufgabe der vorliegenden Erfindung, ein Verfahren zu schaffen, mit dem ein in einem Behälter aufgenommenes Brät, auch in einem vollautomatisierten Herstelllungsverfahren, eine optisch und geschmacklich derart positive Anmutung bekommt, daß dem potentiellen Konsumenten ein solcher Geschmack und ein solcher optischer Eindruck von dem Brät vermittelt wird, der gleich ist zu dem, wie er bei der Herstellung dänischer Leberpastete erreicht wird, wobei aber am Ende des Herstellungsvorganges immer ein hermetischer Verschluß des Behälterunterteils mit einem Behälteroberteil (Deckel) steht. Das Verfahren soll zudem unter weitgehender Nutzung bisher auch für die automatische Herstellung von Leberpastete bisher verwendeten Verfahrensschritten durchführbar sein und einfach und kostengünstig ausführbar und faktisch für alle Brätsorten, nicht nur für Leberpastete, gleichermaßen gut anwendbar sein.

Gelöst wird die Aufgabe der Erfindung dadurch, daß
c. die später sichtbare Darbietungs- und/oder Darreichungsoberfläche des Bräts mit einer Kruste versehen wird.

Der Vorteil der erfindungsgemäßen Lösung besteht im wesentlichen aus der Trennung der Wärmezufuhr auf das Brät bzw. zum Brät zum Erreichen eines vorbestimmbaren Backgrades und gem. Merkmal c. der gesonderten Ausbildung einer Kruste auf der von außen sichtbaren Darreichungsoberfläche.

Erfindungsgemäß sind der Schritt c. und der später erfolgende Garschritt d., dem das Brät ausgesetzt ist, was als vorteilhafte Weiterbildung der Erfindung unten beschrieben ist, voneinander entkoppelt und können somit aufgrund unterschiedlicher gewählter Parameter eingestellt werden und es können somit herstellerseitige Vorgaben berücksichtigt und genau eingehalten werden und darüber hinaus auch auf die entsprechenden Wünsche und Gewohnheiten der potentiellen Konsumenten abgestellt werden.

Schließlich ist es von außerordentlich großen Vorteil, daß dennoch preisgünstig bereitstellbare Kunststoffbehälter aus spritzbarem Kunststoff, die als Massenprodukte zur Verfügung stehen, verwendet werden können und dabei eine Wärmeüberlast für den Verfahrensschritt c. in Abhängigkeit des verwendeten Behälterwerkstoffs und in Abhängigkeit des im Behälterunterteil aufgenommenen Bräts und dessen Konsistenz eine Beschädigung des Behälterunterteils dabei faktisch ausgeschlossen werden kann.

Das Ergebnis bei dem vorangehend aufgeführten, erfindungsgemäß vorgeschlagenen Verfahren ist, daß ein Behandlungsergebnis des Bräts erreicht wird, wie es bisher nur bei der konventionell herstellten, typisch dänischen Leberpastete, die nur in einem bei der Herstellung und der anschließenden Darreichung offenen Aluminiumbehälter realisierbar war.

Gem. einer sehr vorteilhaften Ausführungsform des Verfahrens wird
d. das Brät durch Wärmezufuhr auf eine Temperatur gebracht und wird über ein vorbestimmbares Zeitintervall lang auf dieser Temperatur bis zum Erhalt eines vorbestimmbaren Backgrades gehalten.

Gem. einer vorteilhafteten Ausgestaltung des Verfahrens wird das Zeitintervall gem. Merkmal d. derart lang gewählt, daß das Brät noch pastös ist. Das Verfahren kann auch so geführt werden, daß das Brät, bevor es eine Wärmezufuhr gem. Merkmal d. erfährt, noch in einem pastösen Zustand, vom Herstellungsort des Bräts herangeführt, gem. Merkmal b. in das Behälterunterteil eingefüllt wird.

D.h. mit anderen Worten, daß es vorteilhaft sein kann, das Brät außerhalb des Behälters bis zu einem vorbestimmbaren Pastösungsgrad zu erwärmen oder daß es vorteilhaft möglich ist, das Brät im Behälter befindlich zu erwärmen, bis es einen vorbestimmbaren Backgrad erreicht hat.

Gem. einer sehr vorteilhaften Ausführungsform der Erfindung ist die Temperatur der zugeführten Wärme größer als 100° C und bis in den Bereich von größer als 380° C wähl-und zuführbar. Die Temperatur wird in Abhängigkeit des Bräts gewählt und in Abhängigkeit der zu erwärmenden Menge des Bräts, wobei die Möglichkeit gegeben sein soll, daß das Brät quasi entweder gekocht und/oder gebacken werden kann.

Vorzugsweise erfolgt die Wärmezufuhr bei einer Temperatur im Bereich von 160° C bis 180° C, was sich insbesondere bei einem Leberpastetenbrät als außerordentlich vorteilhaft herausgestellt hat.

Darüber hinaus ist es ebenfalls vorteilhaft, die Dauer der Wärmebehandlung des Bräts gem. Merkmal d. in einem Bereich von 40 min. bis 120 min. vonstattengehen zu lassen. Auch die Dauer der Wärmebehandlung des Bräts wird grundsätzlich in Abhängigkeit der Art des Bräts sowie der Menge des zu erwärmenden Bräts gewählt werden und ggf. einer erfolgten Wärmebehandlung des Bräts, s. oben.

Durch die Ausbildung der Kruste gem. Merkmal c. wird, je nach der dafür verwendeten Wärmebehandlung, auch das sich im Behälterunterteil bzw. Behälter schlechthin befindliche Brät zusätzlich mit Wärme beaufschlagt, was zunächst zwar grundsätzliche ein nicht gewollter Effekt ist, was aber durch geeignete Wahl der Behandlungsparameter bei den Verfahrensschritten c. und/oder d. dennoch zugunsten der Gesamtbehandlung des Bräts vorteilhaft ausgenutzt werden kann.

Es sind Verfahrensschritte möglich, bei denen sowohl die Wärmezufuhr zum Brät bis zum Erreichen eines vorbestimmten Backgrades als auch die Ausbildung einer Kruste, jeweils wenigstens bis zu einem jeweiligen gewissen Grade außerhalb des eigentlichen Behälters bzw. Behälterunterteils erfolgen zu lassen, bspw. in einer ähnlich dem Behälter bzw. Behälterunterteil ausgebildeten Zwischenform einer Herstellungsverfahrensstrecke, und dann den mit einer Kruste versehenen Brätkörper in das den angestrebten Verkaufsgedanken fördernden Darreichungsbehälter zu überführen und in diesen faktisch eine Endbehandlung zur Endausbildung der Kruste und zum Erreichen des bestimmungsgemäßen bzw. gewünschten Backgrades mittels Wärme zu behandeln.

Es sind verschiedene Möglichkeiten realisierbar, die Ausbildung der Kruste gem. Merkmal c. mittels thermischer Beeinflussung der sichtbaren Darreichungsoberfläche des Bräts erfolgen zu lassen, grundsätzlich ist es aber auch möglich, bspw. bei der Befüllung des Behälterunterteils mit Brät bzw. bei der Befüllung einer Zwischenherstellungsform, s. wievor, mit Brät, auf die Oberfläche des eingefüllten Bräts eine Schicht geringer Dikke, bspw. im Bereich 0,5 mm bis 5 mm, aufzubringen, die zusätzlich Bestandteile enthält, die einen schnelleren und optisch ansehbareren Bräunungsgrad der sichtbaren Darreichungsoberfläche als durch das normale Brät garantieren, so daß ggf. der Verfahrensschritt c. zeitlich verkürzt mit ggf. besserer optischer und geschmacklicher Wirkung erreicht werden kann.

In den meisten Fällen wird die Kruste thermisch aus dem eigentlichen Brät erzeugt und nicht aus einer entsprechend eingefärbten Schicht aus dem Brät oder gar einer entsprechend eingefärbten Schicht aus einem gefärbtem Material, was aber grundsätzlich auch oder zusätzlich zur Erzeugung der Schicht aus dem Brät möglich wäre.

Gem. einer weiteren vorteilhaften Ausgestaltung der Erfindung erfolgt die thermische Beeinflussung der Darreichungsoberfläche des Bräts, d.h. der Kruste gem. Merkmal c. mittels direkter, gerichteter Wärmestrahlung, bspw. Infrarot-Wärmestrahlung, wie sie bspw. von einer grilllähnlichen Einrichtung erzeugt werden kann.

Bei einer noch anderen vorteilhaften Ausgestaltung des Verfahrens wird die Wärme gem. Merkmal d., d.h. der etwas unscharf Backvorgang genannte Vorgang des Bräts mittels Ultraviolete-Strahlung erzeugt, d.h. einer nicht sichtbaren Wärmestrahlung, wie sie bspw. in Backröhren bzw. Wärmeöfen Verwendung findet.

Ebenfalls ist es alternativ oder kumulativ vorteilhafterweise möglich, die Wärme gem. Merkmal c. mittels einer offenen Flamme auf die Darbietungs- und/oder Darreichungsoberfläche zu geben, wodurch zusätzlich zur Ausbildung der Kruste auch eine geschmackliche Beeinflussung der Kruste, bspw. ein Rauchgeschmack, erzielt werden kann.

Wie schon vorangehend angedeutet, werden sich die einzelnen Wärmebehandlungsmaßnahmen gem. Merkmal c. und gem. Merkmal d. zwangsweise bis zu einem gewissen Grad überlagern, was aber insofern bei geeigneter Steuerung der Wärmezufuhr keine Nachteil bringt als das die an sich voneinander entkoppelten einzelnen Verfahrensschritte c. und d. jeweils als Energiespeicher und Energielieferant auch für die jeweils andere Behandlung verwendet werden und somit der gesamte für die verfahrensmäßig Behandlung des Bräts benötigte Energiebedarf reduziert sein kann.

Vorteilhafterweise wird das Verfahren derart geführt, daß das Brät nach erfolgten Abschluß der Wärmezufuhr gem. Merkmal d. mittels dem Behälteroberteil wenigstens luftdicht verschlossen wird, wobei das mit einem Behälteroberteil und einem Behälterunterteil erfolgen kann, wie es in der EP-A-1 475 314 beschrieben ist.

Bei einer noch anderen vorteilhaften Ausgestaltung des Verfahrens wid das Behälterunterteil mit dem Brät wenigstens luftdicht verschlossen, was ebenfalls mittels einem Behälteroberteil und einem Behälterunterteil erfolgen kann, wie es in der EP-A-1 475 314 beschrieben worden ist, wobei nachfolgend die Behandlung gem. Merkmal c. erfolgt.

Die vorbeschriebene letzte Variante der Verfahrensführung gestattet faktisch die Ausbildung der Kruste durch das für Infrarotlicht und sichtbares Licht durchlässige Behälteroberteil hindurch, so daß auch bei dieser Verfahrensführung das Endprodukt des Bräts ohne weitere Zwischenschritte oder nachfolgende Verfahrensschritte hervorgeht, was aber den Vorteil gegenüber einer Verfahrensführung hat, bei der erst nach Abschluß der Ausführung des Verfahrensschrittes gem. Merkmal d. das Endprodukt vorliegt, bei dem nachfolgend das Behälteroberteil auf das Behälterunterteil gegeben wird und dort verschlossen wird, womit nämlich ein höherer Sterilisationsgrad des mit einer Kruste versehenen fertigen Bräts im Gesamtbehälter erreichbar ist.

Schließlich es ist außerordentlich vorteilhaft, das Verfahren derart zu führen, daß wenigstens der Verfahrensschritt b. unter Vakuumbedingungen ausgeführt wird und/ oder das wenigstens der Verfahrensschritt c. unter Vakuumbedingungen ausgeführt wird und/oder das wenigstens der Verfahrensschritt d. unter Vakuumbedingungen ausgeführt wird. Der Vorteil der Ausführung dieser Verfahrensschritte unter Vakuum besteht im wesentlichen darin, daß zwangsläufig normalerweise bei der Verfahrensführung auftretende Kondensationswärme an dem den jeweiligen Verfahrensort umgebenden Luftgemisch entfällt und somit die ungewollte Wärmebeeinflussung bei der Ausführung der Verfahrensschritte c. und d. entfällt. Bis zu einem gewissen Grade ist auch damit eine ggf. willkommene Dehydrierung des Bräts einhergehend.

Schließlich kann das Verfahren vorteilhafterweise derart geführt werden, daß der infolge der Behandlung gem. Merkmal c. erfolgende Bräunungsgrad des Bräts durch optische Mittel erfaßt wird und beim Erreichen eines vorbestimmbaren Bräunungsgrads die Behandlung beendet wird,
wobei diese optischen Mittel bspw. infrarotempfindliche Sensoren und/oder ultravioletempfindliche Sensoren und/oder Sensoren sein können, die für optisch sichtbares Licht empfindlich sind.

Die Erfindung wird nun unter Bezugnahme auf die nachfolgenden schematischen Zeichnungen anhand eines Ausführungsbeispieles im einzelnen beschrieben. Darin zeigen:
- Fig. 1: in der Draufsicht ein Behälterunterteil,
- Fig. 2: in der Seitenansicht ein Behälterunterteil,
- Fig. 3: in der Stirnansicht ein Behälterunterteil
- Fig. 4: in der Seitenansicht ein Behälteroberteil,
- Fig. 5: das Behälteroberteil in der Ansicht von Fig. 4 von unten und
- Fig. 6: in der Seitenansicht ein Behälterunterteil gem. Fig. 2 mit einem schematisch angedeuteten optischen Mittel zur Detektion des Bräunungsgrades der Kruste auf der Darreichungsoberfläche des im Behälterunterteil aufgenommen Bräts.

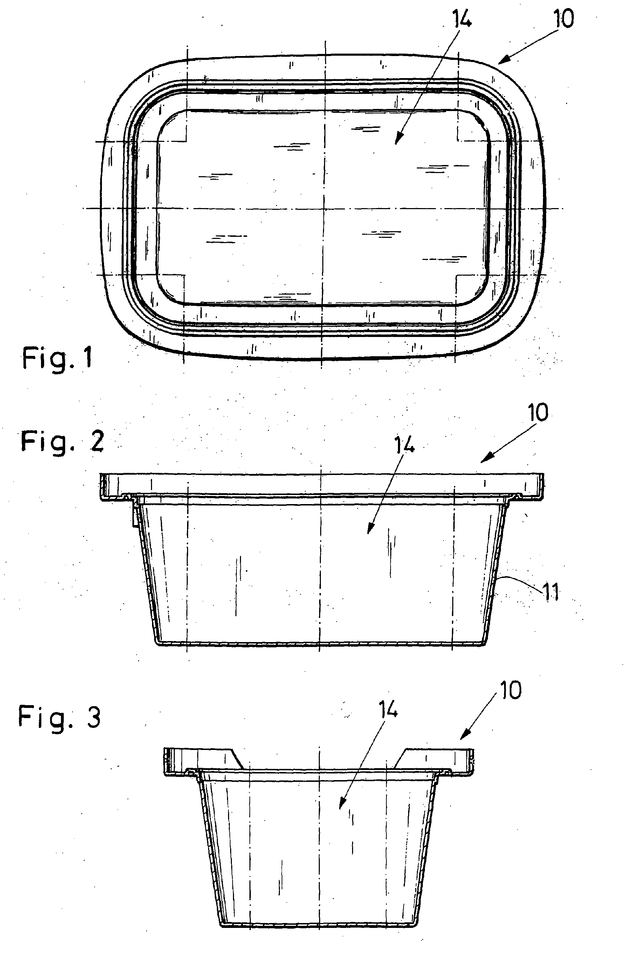

Der in den Fig. 1 bis 6 dargestellte Behälter 10 ist in seiner grundsätzlichen Ausgestaltung ein typischer Behälter 10, wie er zur Ausnahme von Lebensmitteln in einem kleinen Gebinde für den täglichen Gebrauch derartiger Lebensmittel, wie bspw. Käse, Wurstwaren, Joghurt und Butter Verwendung findet. Insbesondere in den skandinavischen Ländern wird auch sogenannte Leberpastete in derartigen Behältern aufgenommen und den Konsumenten dargereicht bzw. dargeboten. Das Behälterunterteil 11, das das Lebensmittel aufnimmt, das nachfolgend mit Brät 13 bezeichnet ist und bspw. ein Leberpastetenbrät ist, wird hier im Zusammenhang mit der Herstellung von Leberpastete benutzt und beschrieben. Das Behälterunterteil 11 besteht hier grundsätzlich aus spritzfähigem Kunststoff, wie er für diese Zwecke Verwendung findet bzw. aufgrund lebensmittelhygienischer Vorschriften Verwendung finden darf.

Grundsätzlich kann das Behälterunterteil 11 aber anstelle von Kunststoff auch aus Metall aber auch aus einem Verbund aus Metall und Kunststoff oder aus Pappe bestehen, was aber für die Beschreibung und das Verständnis eines erfindungsgemäßen Ausführungsbeispieles für das erfindungsgemäße Verfahren ohne Belang ist.

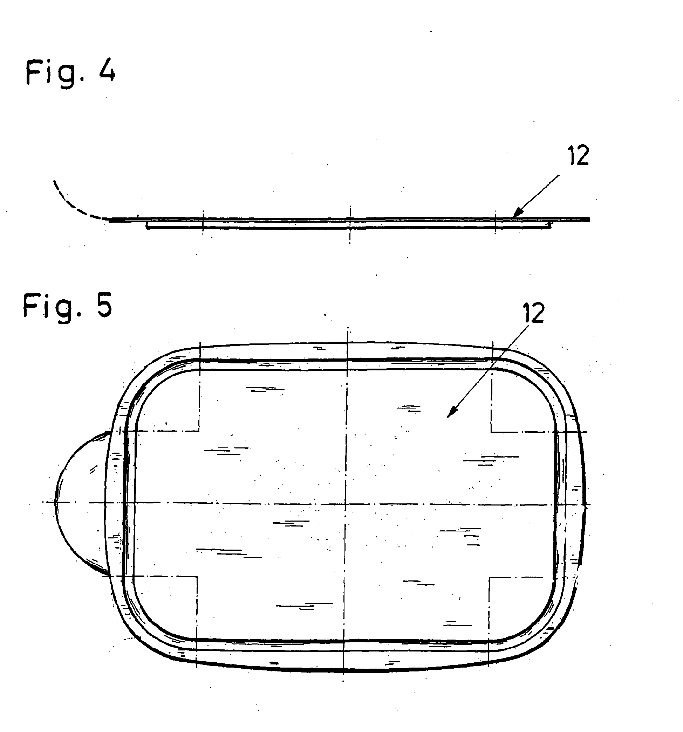

Der Behälter 10 umfaßt auch einen Behälteroberteil 12, vergleiche die Fig. 4 und 5, mit dem das Behälterunterteil verschlossen werden kann, wenn das Brät 13 im Behälterunterteil entweder vollständig oder teilbehandelt worden ist, was weiter unter noch im einzelnen beschrieben wird. Das Behälteroberteil 12 ist regelmäßig für sichtbares Licht optisch transparent, so daß ein Konsument, wenn der mit dem Lebensmittel bzw. dem Brät 13, bspw. in Form einer Leberpastete, gefüllte Behälter 10 bspw. in einem Regal in einem Supermarkt oder in einem Geschäft dargereicht wird, den Inhalt des Behälters 10 betrachten kann.

In einem ersten Verfahrensschritt wird
a. der Behälter 10 hergestellt (Herstellung nicht dargestellt) und das Brät 13 ebenfalls, das auf an sich bekannte Weise anderenorts hergestellt wird.

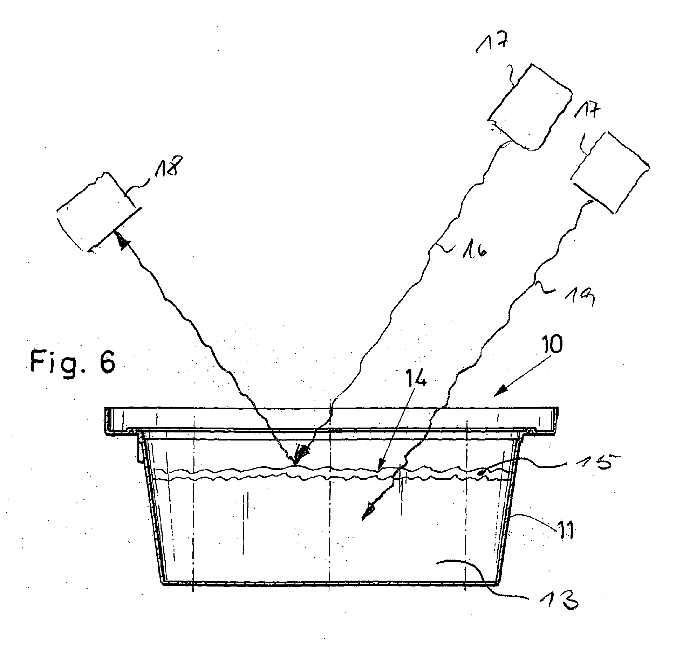

Danach wird gem. Verfahrensschritt
b. das Brät 13 in das Behälterunterteil 11 eingefüllt,
vergleiche Fig. 2 und 6. Das in das Behälterunterteil eingefüllte Brät kann an dazu hier nicht gesondert dargestellter Stelle vorgegart bzw. vorgebacken sein, es muß aber dennoch noch eine solche Pastösität aufweisen, das es mit Fülleinrichtungen, die regelmäßig für die Befüllung von Behältern mit Lebensmitteln verwendet werden, in das Behälterunterteil 11 eingefüllt werden kann.

Nachfolgend wird dann in einem nächsten Verfahrensschritt, ggf. nachdem ein Vorbackgrad des Bräts 13 erreicht ist, s. oben, gem. Merkmal
c. die später für den Konsumenten sichtbare Darreichungsoberfläche 14 des Bräts 13 mit einer Kruste 15 versehen, und zwar durch Wärmestrahlung 16 im Infrarotbereich, wobei die Erzeugung dieser Infrarot-Wärmestrahlung 16 ebenfalls in einer Wärmestrahlungseinrichtung 17 erzeugt werden kann.

Die Behandlung der sichtbaren Darreichungsoberfläche 14 des Bräts 13 wird derart lange mit Infrarot-wärmestrahlung 16, wie sie bspw. in einem Grill erzeugt wird, behandelt, bis die Kruste 15 den angestrebten Bräunungsgrad erreicht hat, d.h. eine appetitanregende äußere Anmutung erreicht hat. Die Ausbildung der Kruste 15 erfolgt verfahrensgemäß regelmäßig bei im Behälterunterteil 11 aufgenommen Brät 13, es ist aber auch bspw. denkbar, daß der Backschritt gem. Verfahrensschritt c und der Krustenausbildungsschritt gem. Verfahrensschritt b. in einer der Befüllung des Behälterunterteils 11 vorgelagerten Herstellungsposition in Form einer Zwischenform entsprechend ausgeführt wird und nur noch in einem letzten "Feinschliff" nach Überführung des Gebildes aus Brät 13 und Kruste 15 in ein Behälterunterteil 11 die Behandlungsschritte c. und d. nur noch kurzzeitig erfolgen.

Nachfolgend wird dann in einem nächsten Verfahrensschritt
d. das Brät 13 durch Wärmezufuhr, die in einer Wärmestrahlungseinrichtung 17 erzeugt wird,
vergleiche auch Fig. 6,
auf eine Temperatur gebracht, wobei das Brät 13 eine vorbestimmbares Zeitintervall lang auf dieser Temperatur bis zum Erhalten eines vorbestimmbaren Backgrades gehalten wird.

Die von der Wärmestrahlungseinrichtung 17 kommende Wärmestrahlung ist regelmäßig die, wie sie zum "Backen" konventionell bzw. im Privathaushalt hergestellte Leberpastete verwendet wird. Es ist aber auch möglich, Wärme in dem in dem Behälterunterteil 11 befindlichen Brät 13 selbst zu erzeugen, bspw. durch Wärmeerzeugung durch Mikrowellen bzw. Mikrowellenerzeugungseinrichtungen. Insofern ist die in Fig. 6 die Wärmestrahlungseinrichtung 17 auch als mikrowellenerzeugende Einrichtung zu verstehen.

Mittels optisch Mittel 18 kann sowohl der Backgrad des Bräts 13 und der Bräunungsgrad der Kruste 15 erfaßt werden und derart gesteuert werden, daß beim Erreichen des vorbestimmten Backgrades und des vorbestimmten Bräunungsgrades der fertig behandelte Behälter 10 vom Verfahrensort d. entfernt und ein neuer Behandlungszyklus für einen neuen Behälter 10 inganggesetzt werden kann.

Nach Abschluß des Behandlungsverfahrens, d.h. nach Abschluß des Verfahrensschrittes d., wird das Behälterunterteil 11 auf an sich bekannte Weise mit dem Behälteroberteil 12 verschlossen.

Durch Verwendung geeigneter Werkstoffe für insbesondere die Ausbildung des Behälteroberteils 11 kann der Verfahrensschritt c. auch durch das Behälteroberteil 12 hindurch, das zuvor das Behälterunterteil 11 verschlossen hat, hindurch erfolgen. Dadurch kann auch sehr hohen Sterilitätsanforderungen im Hinblick auf das Brät entsprochen werden. Sinngemäß das gleiche gilt für das Behälterunterteil 11 und somit für den Verfahrensschritt d.

Alle vorbeschriebenen Herstellungs- bzw. Behandlungsschritte des Bräts 13 frei von dem Behälter 10 und/oder bis in dem Behälter 10 aufgenommenen Zustand können insgesamt in einem Umgebungsvakuum bzw. in den einzelnen Herstellungsbereichen, die ein Vakuum aufweisen, durchgeführt werden.

### Bezugszeichenliste

- 10: Behälter
- 11: Behälterunterteil
- 12: Behälteroberteil
- 13: Brät
- 14: Darreichungsoberfläche
- 15: Kruste
- 16: Infrarot-wärmestrahlung
- 17: Wärmestrahlungseinrichtung
- 18: optisches Mittel
- 19: Wärmestrahlung

## Patentansprüche

1. Verfahren zur Aufnahme und Behandlung eines Bräts (13) in einem Behälter (10), im wesentlichen bestehend aus Behälterunterteil (11) und Behälteroberteil (12), insbesondere eines Bräts (13), das Grundlage für eine Leberpastete ist, wobei das Brät (13) nach Abschluß der Behandlung im Behälter (10) dargeboten und/oder dargereicht wird, umfassend folgende Schritte:
a. Herstellung des Behälter (10) und Herstellung des Bräts (13) sowie
b. Einfüllen des Bräts in das Behälterunterteil (11),
**dadurch gekennzeichnet, daß**
c. die später sichtbare Darbietungs- und/oder Darreichungsoberfläche (14) des Bräts (13) mit einer Kruste (15) versehen wird.

2. Verfahren nach Anspruch 1, **dadurch gekennzeichnet, daß** gem. Merkmal d. das Brät (13) durch Wärmezufuhr auf eine vorbestimmbare Temperatur gebracht und über ein vorbestimmtes Zeitintervall lang auf dieser Temperatur bis zum Erhalten eines vorbestimmbaren Backgrades gehalten wird.

3. Verfahren nach Anspruch 2, **dadurch gekennzeichnet, daß** das Zeitintervall gem. d. zunächst derart lange gewählt wird, daß das Brät (13) noch pastös ist.

4. Verfahren nach Anspruch 2, **dadurch gekennzeichnet, daß** die Wärmezufuhr gem. Merkmal d. auf das sich im Behälter (10) befindliche Brät (13) erfolgt.

5. Verfahren nach einem oder mehreren der Ansprüche 2 bis 4, **dadurch gekennzeichnet, daß** die zugeführte Wärme größer als 100° C ist und bis in den Bereich von größer als 380° C wähl- und zuführbar ist.

6. Verfahren nach Anspruch 5, **dadurch gekennzeichnet, daß** die Wärmezufuhr im Bereich von 160° C bis 180° C erfolgt.

7. Verfahren nach einem oder mehreren der Ansprüche 2 bis 6, **dadurch gekennzeichnet, daß** die Dauer der Wärmebehandlung gem. Merkmal d. 40 min. bis 120 min. beträgt.

8. Verfahren nach einem oder mehren der Ansprüche 1 bis 7, **dadurch gekennzeichnet, daß** die Ausbildung der Kruste (15) gem. Merkmal c. bei dem sich im Behälter (10) befindlichen Brät (13) erfolgt.

9. Verfahren nach einem oder mehreren der Ansprüche 1 bis 8, **dadurch gekennzeichnet, daß** die Ausbildung der Kruste (13) gem. Merkmale c. mittels thermischer Beeinflussung der sichtbaren Darbietungs- und/oder Darreichungsoberfläche (14) des Brätes (13) erfolgt.

10. Verfahren nach einem oder mehreren der Ansprüche 1 bis 9, **dadurch gekennzeichnet, daß** die thermische Beeinflussung der Darbietungs- bzw. Darreichungsoberfläche (14) des Bräts (13) gem. Merkmal c. mittels direkter, gerichteter Wärmestrahlung erfolgt.

11. Verfahren nach Anspruch 10, **dadurch gekennzeichnet, daß** die Wärmestrahlung durch eine Einrichtung (17) nach Art eines Grills erzeugt wird.

12. Verfahren nach einem oder mehreren der Ansprüche 1 bis 11, **dadurch gekennzeichnet, daß** die Wärme gem. Merkmal c. UV-Strahlung ist.

13. Verfahren nach einem oder mehreren der Ansprüche 1 bis 12, **dadurch gekennzeichnet, daß** die Wärme gem. Merkmal c. mittels einer offenen Flamme auf die Darbietungs-und/oder Darreichungsoberfläche gegeben wird.

14. Verfahren nach einem oder mehreren der Ansprüche 2 bis 13, **dadurch gekennzeichnet, daß** die Wärme gem. Merkmal d. durch Mikrowellenbeeinflussung des Bräts (13) erzeugt wird.

15. Verfahren nach einem oder mehreren der Ansprüche 2 bis 14, **dadurch gekennzeichnet, daß** das Brät (13) nach erfolgtem Abschluß der Wärmezufuhr gem. Merkmal d. mittels dem Behälteroberteil (12) wenigstens luftdicht verschlossen wird.

16. Verfahren nach einem oder mehreren der Ansprüche 1 bis 15, **dadurch gekennzeichnet, daß** das Behälterunterteil (11) mit dem Brät (13) wenigstens luftdicht verschlossen wird und wobei nachfolgend die Behandlung gem. Merkmal d. erfolgt.

17. Verfahren nach einem oder mehreren der Ansprüche 1 bis 16, **dadurch gekennzeichnet, daß** wenigstens der Verfahrensschritt b. unter Vakuumbedingungen ausgeführt wird.

18. Verfahren nach einem oder mehreren der Ansprüche 2 bis 17, **dadurch gekennzeichnet, daß** wenigstens der Verfahrensschritt c. unter Vakuumbedingungen ausgeführt wird.

19. Verfahren nach einem oder mehreren der Ansprüche 2 bis 18, **dadurch gekennzeichnet, daß** wenigstens der Verfahrensschritt d. unter Vakuumbedingungen ausgeführt wird.

20. Verfahren nach einem oder mehreren der Ansprüche 1 bis 19, **dadurch gekennzeichnet, daß** der infolge der Behandlung gem. Merkmal c. erfolgende Bräunungsgrad des Bräts (13) durch optische Mittel (18) erfaßt wird und beim Erreichen eines vorbestimmbaren Bräunungsgrades die Behandlung beendet wird.
